# EUROPEAN PATENT SPECIFICATION

(11) **EP 1 432 554 B1**
(45) Date of publication and mention of the grant of the patent: **07.11.2007**
(21) Application number: 02773109.0
(22) Date of filing: 27.09.2002
(51) Int. Cl.: B25J 13/02

(54) **INDUSTRIAL ROBOT SYSTEM COMPRISING A PROGRAMMABLE UNIT**
INDUSTRIEROBOTERSYSTEM MIT EINER PROGRAMMIERBAREN EINHEIT
SYSTEME DE ROBOT INDUSTRIEL COMPRENANT UNE UNITE PROGRAMMABLE

(30) Priority: 01.10.2001 SE 0103251
(43) Date of publication of application: 30.06.2004
(73) Proprietor: ABB AB, 721 83 Västerås (SE)
(72) Inventor: VALEN, Roald, NO-4352 Kleppe (NO); SJÖBERG, Ralph, S-721 55 Västeras (SE)
(74) Representative: Dahlstrand, Björn
(86) International application number: PCT/SE2002/001772
(87) International publication number: WO 2003/072316

(56) References cited:
- EP-A1- 0 310 958
- EP-A1- 0 333 874
- EP-A1- 0 960 697
- DE-C1- 19 630 971
- DE-U1- 29 723 792

## Description

### TECHNICAL FIELD

The invention relates to an industrial robot system comprising at least one industrial robot and a portable unit connected to the robot system for programming and operation of the movements of a robot.

### BACKGROUND ART

An industrial robot system comprises at least one industrial robot with a manipulator, a control system and a programming and control unit for programming the movements of the robot. The programming and control unit is portable and is designated TPU, Teach Pendant Unit, in the following. A TPU usually comprises function controls, a joystick and a display screen.

From the document US 5 790 401, a TPU is previously known which comprises an input unit in the form of a touch screen as well as a joystick. The object of the TPU is to combine the possibilities of control of the robot via a joystick and control via a touch screen.

The document US 6 134 102 shows a TPU with an ergonomically designed outer casing intended to allow an operator to grip it in various convenient ways. Either the operator holds the TPU with both his hands or with his left hand only. Throughout, the object is to hold the TPU with one's left hand and to operate the other function keys and the joystick with one's right hand. Alternatively, the TPU is designed to stand on a base. The known TPU does not permit left-handed operation. If the operator wants to hold the TPU in his right hand and operate the function key with his left hand, a version of a TPU adapted for left-handed persons must also be manufactured.

When programming the movements of a robot, different operators operate at different times with the same TPU. Some of the operators are right-handed and others are left-handed. In addition, there are operators who alternately use their right and left hands. There are several reasons therefor. One example is in order to reduce the static load that arises when a right-handed operator holds the TPU too long with his right hand or the corresponding case for a left-handed operator. Another example is when the space around a robot is such that one hand is preferable to the other in certain positions during programming and operation. Thus, the need of a TPU arises which is designed so as to allow operation by either the left or the right hand. This need comprises the possibility that the operator, during the course of the work, moves the TPU from one hand to the other and hence works alternately with his right and his left hand, respectively. In addition, there is a need of a TPU with improved ergonomics that reduces the static loads that arise during work with a portable TPU and hence makes possible longer working periods with the TPU.

The phenomenon of operating an industrial robot via a TPU is surrounded by rules and regulations for maintaining the necessary safety and avoiding accident involving both people and material. For example, there are regulations that the TPU shall comprise a so-called enabling device that gives the operator access to the robot. An enabling device corresponds to the previous designation "dead man's handle", that is, the enabling device requires an active and continuous action by the operator to allow access to the robot. By having access to the robot via an enabling device, the operator must operate the robot with a limited speed, which normally amounts to about 250 mm/s.

Furthermore, there is a regulation to the effect that "the key that starts the movement of a robot should also stop it". That regulation applies, inter alia, if the operator operates the robot at full speed manually via the TPU, that is, when the robot moves at the speed prescribed by the program. The safety philosophy behind the current regulation thus implies that a TPU shall be provided with an enabling device and a function control that, activated simultaneously, give the operator access to operate a robot at full speed in accordance with the current program. The latter function control is designated HTR (hold-to-run) button in the following. When an operator is to operate a robot at full speed, it is.thus required that the operator continuously activates an HTR button to be granted access to operate at full speed and holds it activated as long as the robot is being operated at a high speed.

A TPU is often provided with a display screen. Either the display screen has the function of a touch screen or the TPU comprises a keyboard. Irrespective of the design, this impose further requirements on the operator who should manage to hold the TPU, to activate a number of function controls and at the same time with one finger, part of his hand, or some other touch tool, program and operate the movements of the robot. The work becomes both physically and mentally strenuous for the operator when his hands do not cope with everything that has to be done simultaneously. The work is made more difficult by the fact that the operator is subjected to static loads in his hands, arms, shoulders and neck since the work with the TPU is time-consuming and not flexible. This creates a need of a TPU with improved ergonomics that makes possible a more comfortable grip for the hand of the operator when a number of function controls are to be activated simultaneously.

A TPU is connected to a control system either via a cable or via wireless communication. When it is connected by means of a cable, an ample length of cable is required to give an operator the necessary freedom to move around with the TPU. This means that the cable will partly be positioned on the floor, with an ensuing risk that a passing vehicle will run over and damage the cable. A damaged cable leads to a shut-down and the activity stops until the damage has been attended to. The problem is that if this occurs relatively frequently, it entails unwanted losses of time and extra costs.

Document EP-A-0 960 697 discloses an industrial robot system and a TPU according to the preambles of Claims 1 and 5.

It is realized from the above description that there is a need for a robot operator to manage to grip a TPU such that the work with the TPU becomes comfortable, ergonomically correct and that the picture on the display screen is oriented so as to be legible to the operator. In addition, an operator shall both activate certain function controls and carry out the necessary touch movements or press the necessary buttons for the programming and control of the robot according to the above. Taken together, this leads to a need of a TPU which, in a comfortable way, makes possible, facilitates and simplifies the work for the operator and which, in addition thereto, fulfils the current safety regulations. In addition, the cable connected to the TPU should be arranged so as to reduce the risk of damage.

The TPUs available on the market today have the disadvantage of requiring a precise grip on the enabling device in order for the operator to have access to the robot. In a previously known mechanical double-channel solution involving two buttons, it is required that the operator should press both buttons simultaneously to be granted access to a robot. Problems arise when the operator omits to press both buttons or presses the buttons with a certain delay in time, resulting in the two signals being displaced in phase. A TPU is programmed to accept a certain phase displacement, and in the two mentioned situations the phase displacement of the signals often becomes too great. This results in denied access to the robot. The operator has to start again from the beginning and grip the enabling device with better precision. Sometimes, the operator has to start all over again several times before access is granted, which makes the work time-consuming and the operation of the robot expensive. In addition, it creates a source of irritation to the operator. This results in a need of a TPU provided with an enabling device that is simple to grip and that permits access to the robot without requiring precision of the grip.

Another disadvantage of known TPUs is that they are adapted to be gripped by a hand of normal size, which implies that persons with comparatively large or small hands find it more difficult to handle the TPU. This calls for a programming unit, TPU, which is ergonomically designed, which suits both right- and left-handed persons and which facilitates and makes more efficient the work of the operator.

### SUMMARY OF THE INVENTION

The object of the present invention is to facilitate the work of an operator to work with a TPU, defined according to the above, when handling an industrial robot. The object is thus to arrange an industrial robot system with a portable TPU, which permits the operator to work in a flexible, efficient and comfortable manner whether he is right-handed or left-handed. The object comprises arranging the TPU with respect to improved ergonomics to make possible and facilitate longer working periods at the TPU.

According to the invention, the above-mentioned object is achieved with an industrial robot that exhibits the characteristic features described in the characterizing portion of claim 1. The solution according to the invention is to arrange an industrial robot system comprising an industrial robot that includes a manipulator, a control system and a portable programming and control unit, TPU, connected to the control system for programming and operating the robot. The TPU according to the invention is enclosed and provided with a handle comprising a gripping surface for the gripping hand of an operator. The TPU is adapted to adopt a first operating position A for a right hand, in which position the robot is operated with the left hand and is adapted to adopt a second operating position B for a left hand, in which the robot is operated with the right hand. The gripping surface is arranged symmetrically around a longitudinal line C to allow comfortable gripping by either the right or the left hand. This makes the TPU operable with either the right or the left hand. The TPU is thus operable with either the left or the right hand in the respective operating positions.

The inventive concept comprises arranging the industrial robot system according to the invention in accordance with the dependent claims 2-4. Thus, the inventive concept comprises arranging the TPU with a display screen and a first function control to orient a picture on the display screen legible to the operator. By activating the first function control, it is possible to orient the picture so as to be legible to the operator. In an advantageous embodiment of the invention, the TPU is connected via a red cable to the control system.

In an advantageous embodiment of the invention, a second and a third function control are arranged within the gripping area of a hand in operating position A or B. The gripping surface and the second function control are arranged on the TPU to make it possible for an operator to carry the unit with one hand while at the same time activating the second function control with the same hand. This gives the operator a second hand free for handling of the other function controls.

The inventive concept comprises a portable programming and control unit, TPU, in accordance with the independent claim 5. Thus, the inventive concept includes a TPU for programming and operating an industrial robot including a manipulator and a control system. The TPU according to the invention is enclosed and provided with a handle comprising a gripping surface for the gripping hand of an operator, a display screen adapted to show a picture, and a plurality of function controls. The gripping surface is adapted to be graspable with either the right or the left hand. The TPU is adapted to adopt a first operating position A for a right hand, which position permits the robot to be operable with the left hand. The TPU is adapted to adopt a second operating position B for a left hand, which position permits the robot to be operable with the right hand. The display screen is visible for the operator in both operating positions. A first function control is provided with the function of orienting the picture on the display screen in order to be legible to the operator. In one embodiment, a second function control is provided with the function of an enabling device.

In one advantageous embodiment, the enabling device is arranged integrated into the gripping surface. The gripping surface consists at least partly of a layer of a flexible material in the form of an elastic diaphragm-like layer, which covers the enabling device. The elastic layer covers the gripping surface, where the gripping surface has an extent larger than a comparatively large hand. This means that the enabling device and the gripping surface, respectively, suit and are large enough for all sizes of hands, irrespective of whether the operator is right-handed or left-handed. The operator's hand rests against the elastic layer made of, for example, rubber. The hand activates the enabling device while at the same time gripping and holding the TPU. The TPU according to the invention has the advantage of allowing a gripping hand to activate the enabling device irrespective of where on the enabling device the grip is being made. This entails the possibility of the enabling device being activated even if the hand grips somewhat obliquely.

In one advantageous embodiment, the enabling device comprises a multi-channel contact with a yoke and at least two circuit breakers arranged in spaced relationship to each other. The yoke is bow-shaped and adapted to influence all the circuit breakers. It is part of the inventive concept that the operator, by touching/loading the yoke at one point only, activates all the circuit breakers. The enabling device according to the invention hence makes it possible for an operator to press at an arbitrary point on the enabling device and still activate the yoke and thereby all the circuit breakers. This gives the operator access to a robot irrespective of the position and the size of the hand. This gives the operator a possibility, in a convenient and rapid manner, of gripping the inventive TPU with one hand and finding a comfortable working position for his hand.

It is part of the inventive concept that the TPU comprises a third function control provided with a hold-to-run function, an HTR button. In one advantageous embodiment, the HTR button is arranged within the gripping area of the gripping hand. In another embodiment, the TPU is provided with two HTR buttons, one within the gripping area of a gripping right hand and one within the gripping area of a gripping left hand. In a further advantageous embodiment, the HTR button is arranged within reach of the thumb on the gripping hand. A TPU according to the invention has an ergonomically designed gripping surface and an ergonomically correct location of the function control. An operator has the possibility of gripping the TPU and activating the function control with one hand without having to stretch, tighten or stress his hand. This makes it possible for the operator to work during comparatively longer working periods using a TPU according to the invention.

The inventive concept comprises arranging the TPU with at least one emergency stop. In an advantageous embodiment of the invention, two function controls with an emergency stop function are arranged symmetrically/diagonally on the TPU.

The inventive concept comprises connecting the TPU via a cable to the control system. In an advantageous embodiment of the invention, the cable is painted red.

The inventive concept comprises a method in an industrial robot system in accordance with the independent claim 33. The industrial robot system comprising an industrial robot including a manipulator, a control system and a portable TPU connected to the control system for programming and operating the robot. The programming unit comprises a display screen adapted to show a picture to an operator as well as at least one function control. The method is characterized in that the unit is moved from a first operating position A for a right hand to a second operating position B in a left hand. The picture on the display screen is brought to be oriented so as to be legible to the operator by.the operator activating a first function control.

Hence, the inventive concept comprises a method in which the TPU is moved from a right/left hand to a left/right hand. During the movement, the programming unit is rotated through 180 degrees with the display screen being all the time visible to the operator. Further, the picture on the display screen is brought to be rotated through 180 degrees by the operator activating a first function control.

The inventive concept comprises methods in accordance with the dependent claims 21-24. Thus, the inventive concept comprises arranging the TPU such that an operator, by gripping the programming unit with his right or left hand on the gripping surface, thus holds and carries the TPU. It is also part of the inventive concept that the operator, by the above-mentioned grip, holds and carries the unit as well as activates an enabling device, integrated into at least part of the gripping surface, with one hand. The inventive concept also comprises the operator holding and carrying the unit, activating an enabling device and, in addition, activating the function control with the hold-to-run function with the same hand.

The inventive concept according to the invention comprises use of an industrial robot system, a portable device for programming and operating an industrial robot, and a method in an industrial robot system for wireless connection to an optional industrial robot in accordance with the independent claim 25.

The inventive concept comprises all industrial robots that comprise a control system to which a programming and control unit including a display screen is connected, with or without connection to a data-processing unit with operable application programs for the robot.

This description of the invention is not to be regarded as a limitation of the invention but only as a guidance for a full understanding of the invention. Adaptations to robot cells with other active parts included and replacement of parts and features that are self-evident for a person skilled in the art are, of course, included in the inventive concept.

### BRIEF DESCRIPTION OF THE DRAWING

The invention will be explained in greater detail by description of embodiments with reference to the accompanying drawing, wherein
Figures 1a and 1b show a programmable unit according to the invention, provided with two different function controls,
Figure 1c shows the unit according to Figures 1a and 1b, viewed from below with a symmetry axis C inserted into the figure,
Figures 2a-2c shows a function control according to the invention, comprising a multi-channel contact,
Figure 3 shows a programmable unit according to the invention with three different function controls,
Figure 4 shows a programmable unit according to the invention, provided with an emergency stop,
Figure 5 shows a programmable unit according to the invention, gripped with a right hand,
Figure 6 shows a programmable unit according to the invention, gripped with a left hand,
Figure 7 shows a programmable unit according to the invention, equipped with a red cable for connection to the robot system,
Figure 8 shows a programmable unit according to the invention, connected via wireless connection to the robot system,
Figures 9a-d show how a programmable unit according to the invention is moved while being rotated half a turn from a right hand to a left hand,
Figure 10 shows an industrial robot system with a robot wherein a programmable unit according to the invention is connected to the system via a cable.

### DESCRIPTION OF THE PREFERRED EMBODIMENT

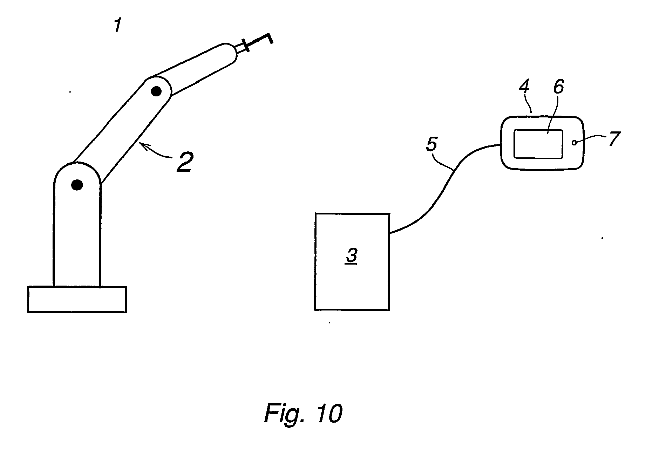

The invention relates to an industrial robot system and the invention is exemplified in Figure 10 by an industrial robot 1 comprising a manipulator 2 with a control system 3. A portable programming and control unit, TPU, 4 is connected to the control system 3 by a cable 5. The programming unit is schematically shown with a display screen and a function control 7.

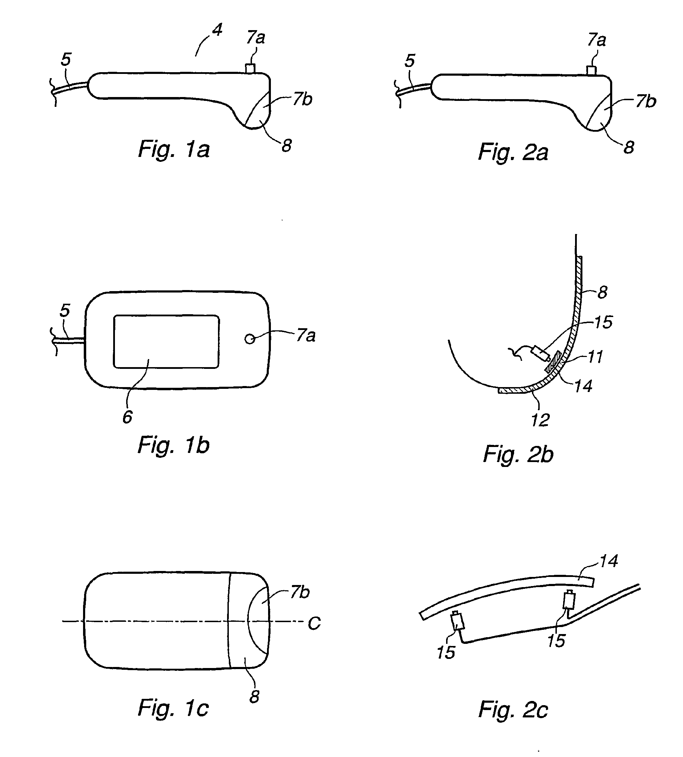

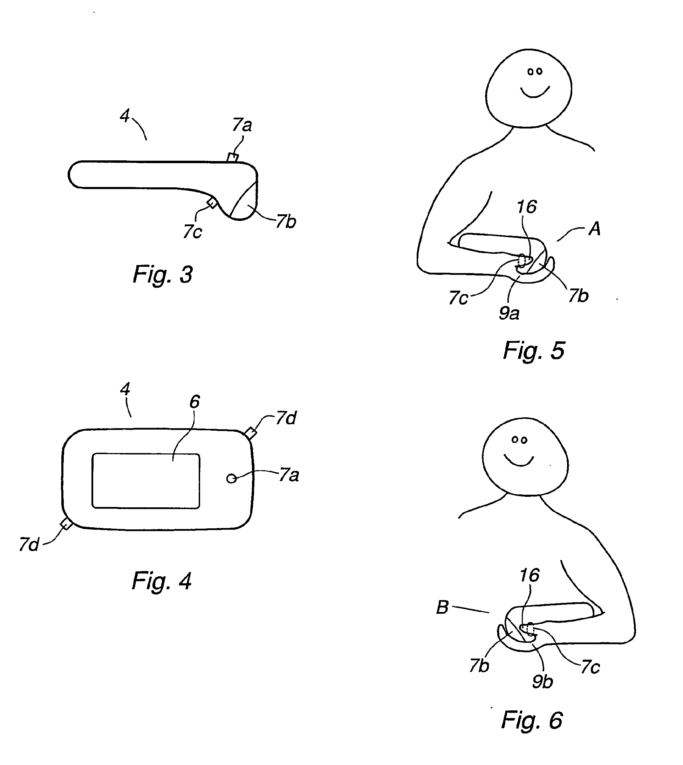

Figures 1a and 1b show a TPU according to the invention provided with a first function control 7a. The TPU is enclosed and has a handle comprising a gripping surface 8. Further, the TPU is provided with a display screen 6 and a second function control 7b. The first function control 7a has the function of orienting the picture by rotating the picture 10 on the display screen through 180 degrees. The second function control 7b has the function of an enabling device 11. The handle comprising the gripping surface 8 is shaped to allow the TPU to be gripped with a right hand 9a or a left hand 9b and is carried resting against the lower arm (schematically shown in Figures 5 and 6) belonging to the gripping hand. Figure 1c shows that the handle with the gripping surface is arranged symmetrically in relation to a longitudinal symmetry line C and permits similar handles fitting either the right hand or the left hand.

Figures 2a-c show a schematic embodiment of an enabling device 11 according to the invention. The enabling device 11 is here integrated into the gripping surface 8. An operator, gripping and holding the TPU, at the same time activates the enabling device 11 and is thus given access to the robot. The enabling device 11 comprises a multi-channel contact and in the present embodiment it includes a yoke 14 and two circuit breakers 15 arranged in spaced relationship to each other. The yoke 14 has an extent such as to influence both circuit breakers. The enabling device 11 is arranged below the gripping surface 8, which in the present embodiment consists of a layer of a flexible material in the form of an elastic diaphragm 12. When a hand grips the TPU, the hand presses on the elastic layer and hence activates the enabling device.

Figure 3 shows an embodiment of the invention in which a TPU is provided with a first 7a, a second 7b and a third 7c function control. The three function controls are arranged on the TPU in such a way that an operator with a right hand 9a or a left hand 9b manages to carry the TPU and to activate the second 7b and the third 7c function control at the same time. In the present embodiment, the third function control 7c is placed on the TPU within the gripping area of the gripping hand.

Figure 4 shows an embodiment of a TPU 4 according to the invention, in which two function controls 7d, with the function of acting as an emergency stop, are symmetrically/diagonally placed on the TPU.

Figure 5 shows an embodiment of a TPU according to the invention, gripped by a right hand 9a. The TPU is in a first operating position A and the gripping right hand 9a activates the second function control 7b while at the same time the hand activates a third function control 7c with the thumb 16.

Figure 6 shows an embodiment of a TPU according to the invention, gripped by a left hand 9b. The TPU is in a second operating position B and the gripping hand 9b activates a second function control 7b while at the same time the hand activates a third function control 7c with the thumb 16.

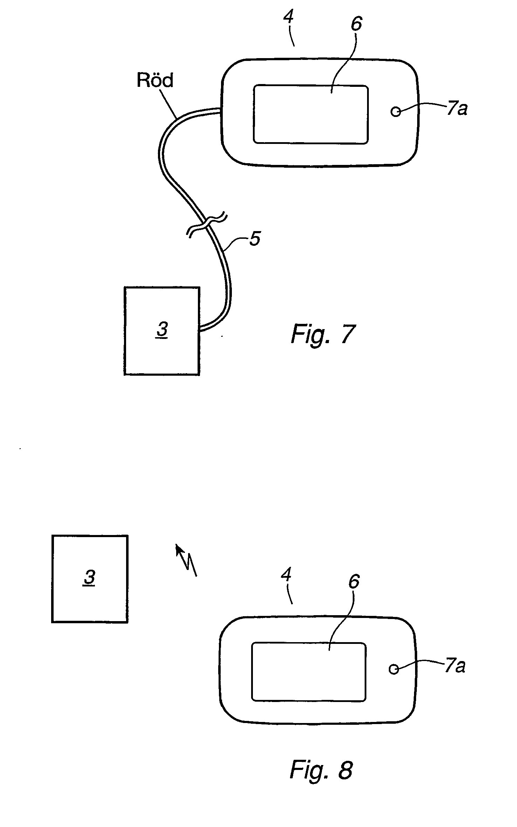

Figure 7 shows an embodiment of a TPU according to the invention, which is connected to a control system 3. Figure 8 shows a TPU corresponding to that of Figure 6, which is connected by wireless connection to a control system 3.

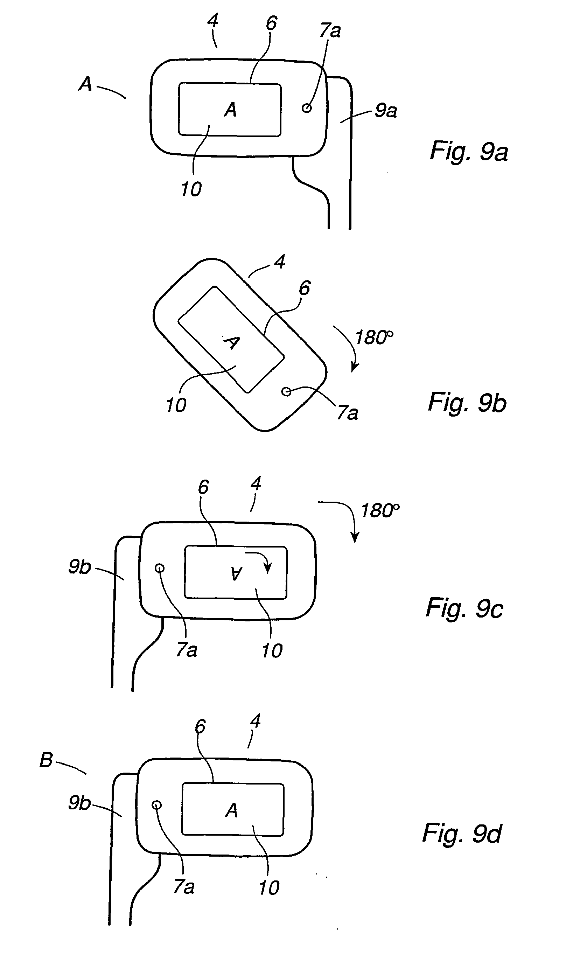

Figures 9a-d illustrate step-by-step the method, according to the invention, of rotating/turning a TPU when moving the TPU from a first operating position A in a right hand 9a to a second operating position B in a left hand 9b and thereafter orienting the picture 10 on the display screen 6 of the TPU by activating a first function control 7a on the TPU, whereby the picture is turned 180 degrees.

## Claims

1. An industrial robot system comprising a industrial robot (1) including a manipulator (2), a control system (3) and a portable programming and control unit, TPU, (4) connected to the control system for programming and operating the robot, the TPU (4) being enclosed and provided with a handle comprising a gripping surface (8) for the gripping hand (9) of an operator, **characterized in that**
the TPU (4) is adapted to adopt a first operating position (A) for a gripping right hand (9a), in which position the robot is operated with the left hand (9b),
the TPU (4) is adapted to adopt a second operating position (B) for a gripping left hand (9b), in which position the robot is operated with the right hand (9a),
the TPU is arranged to be rotated through 180 degrees when moved between the operating positions (A) and (B),
the gripping surface (8) is arranged symmetrically around a longitudinal line (C) to allow comfortable gripping by either a right (9a) or a left (9b) hand,
a first function control (7a) is adapted to orient a picture (10), on a display screen (6) arranged on the TPU, so as to be legible to an operator, and
a second function control (7b) with the function of an enabling device (11) is adapted to be integrated into the gripping surface (8).

2. An industrial robot system according to claim 1, wherein a second function control (7b) and a third function control (7c) are arranged within the gripping area of a hand in operating position (A) or (B).

3. An industrial robot system according to any of the preceding claims, wherein the programming unit (4) is connected via a cable (5) to the control system (3).

4. An industrial robot system according to claim 3, where the envelope surface (17) of the cable (5) is painted red such that the risk of damage of the cable lying on the flood is reduced.

5. A portable programming and control unit, TPU, (4) for programming and operating an industrial robot including a manipulator (2) and a control system (3), said TPU (4) being enclosed and provided with a handle comprising a gripping surface (B) for the gripping hand (9) of an operator, a display screen (6) adapted to show a picture (10), and a plurality of function controls (7), **characterized in that**
the gripping surface (8) is arranged symmetrically around a longitudinal line (C) to allow comfortable gripping by either a right (9a) or a left (9b) hand,
the TPU (4) is adapted to adopt a first operating position (A) for a right hand (9a) and a second operating position (B) for a left hand (9b),
the TPU is adapted to be rotated through 180 degrees when moved between the operating positions (A) and (B) and the display screen (6) being visible to the operator in both positions,
a first function control (7a) is provided with the function of orienting the picture (10) on the display screen (6) so as to be legible to the operator, and
a second function control (7b) with the function of an enabling device (11) is adapted to be integrated into the gripping surface (8).

6. A programming unit according to claim 5, wherein the gripping surface (8) and the second function control (7b) are arranged on the unit (4) to make it possible for an operator to carry the unit (4) and at the same time activate the second function control (7b) with the same left hand (9b)/right hand (9a).

7. A programming unit according to claim 5 or 6, wherein the gripping surface (8) at least partly consists of a layer of a flexible material in the form of an elastic diaphragm (12).

8. A programming unit according to claim 7, wherein the second function control (7b) is adapted to be covered by the elastic diaphragm (12).

9. A programming unit according to any of claims 5-8, wherein the gripping surface (8) is designed to fit both a left hand (9a) and a right hand (9a).

10. A programming unit according to any of claims 5-9, wherein the second function control (7b) comprises a multi-channel contact (13) that is provided with a clamp (14) and at least two circuit breakers (15), where the circuit breakers are arranged in spaced relationship to each other and where the clamp (14) is adapted to influence all the circuit breakers (15).

11. A programming unit according to any of claims 5-10, wherein at least a third function control (7c) is provided with a hold-to-run function.

12. A programming unit according to claim 11, wherein the third function control (7c) is arranged within reach of a gripping hand (9a, 9b) in a gripping position on the gripping surface (8).

13. A programming unit according to any of claims 11-12, wherein a third function control (7c) is arranged on the programming unit (4) within the gripping area of a right hand (9a) and an additional third function control (7c) arranged within the gripping area of a left hand (9b).

14. A programming unit according to any of claims 11-13, wherein the third function control (7c) is arranged within reach of the thumb (16) of the operator's gripping hand.

15. A programming unit according to any of claims 5-14, wherein at least one function control (7d) with an emergency stop function is arranged on the programming unit (4).

16. A programming unit according to claim 15, wherein a first (7d) and a second (7d) function control with an emergency stop function are arranged symmetrically/diagonally on the TPU (4).

17. A programming unit according to any of claims 5-16, wherein the TPU is connected via wireless connection to the control system (3).

18. A programming unit according to any of claims 5-17, wherein the TPU is connected via a cable (5) to the control system (3).

19. A programming unit according to claim 18, wherein the envelope surface (17) of the cable (5) is painted red such that the risk of damage of the cable lying on the floor is reduced.

20. A programming unit according to any of claims 5-19, wherein the gripping surface (8) is symmetrically shaped around a longitudinal symmetry line C.

21. A method of operating an industrial robot system according to claim 1, **characterized in**
gripping the TPU with a gripping hand,
upon gripping the TPU activating a second function control with the function of an enabling device (11) adapted integrated in the gripping surface,
rotating/turning the TPU when moving the TPU from a first operation position A in a gripping and activating right hand (9a) to a second operating position (B)in a gripping and activating left hand (9a),
rotating/turning the TPU when moving the TPU from a second operation position B in a gripping and activating left hand (9b) to a first operating position (A)in a gripping and activating right hand (9a),
orienting the picture (10) on the display screen (6) into an orientation legible to the operator through activating a first function control (7a).

22. A method according to claim 21, wherein the operator, by gripping the programming unit (4) with his right hand (9a)/left hand (9b) on the gripping surface (8), holds and carries the unit (4).

23. A method according to claim 22, wherein the operator both carries the unit (4) and activates a second function control (7b) with the same hand (9a, 9b).

24. A method according to claim 21, wherein the operator carries the unit (4), activates a second function control (7b) and, in addition, activates a function control (7c) with a hold-to-run function with the same hand (9a, 9b).

25. Use of an industrial robot according to any of claims 1-4, a portable TPU for programming an industrial robot according to any of claims 5-20, and a method according to claims 21-24 for wireless connection to an optional industrial robot.

## Patentansprüche

1. Industrierobotersystem, umfassend einen Industrieroboter (1), der aufweist einen Manipulator (2), ein Steuerungssystem (3) und eine tragbare Programmier- und Steuerungseinheit, TPU (4), welche mit dem Steuerungssystem zum Programmieren und Betreiben des Roboters verbunden ist, wobei die TPU (4) eingeschlossen und mit einem Griffstück ausgestattet ist, das eine Griffoberfläche (8) umfasst, für die greifende Hand (9) eines Bedieners, **dadurch gekennzeichnet, dass** die TPU (4) angepasst ist, eine erste Betriebsposition (A), für eine greifende rechte Hand (9a) anzunehmen, in welcher Position der Roboter mit der linken Hand (9b) betrieben wird,
wobei die TPU (4) angepasst ist, eine zweite Betriebsposition (B), für eine greifende linke Hand (9b) anzunehmen, in welcher Position der Roboter mit der rechten Hand (9a) betrieben wird,
wobei die TPU angeordnet ist, um 180 Grad gedreht zu werden, wenn sie zwischen den Betriebspositionen (A) und (B) bewegt wird,
wobei die Griffoberfläche (8) symmetrisch um eine Längslinie (C) angeordnet ist, um ein komfortables Greifen durch sowohl eine rechte (9a), als auch durch eine linke (9b) Hand zu ermöglichen,
wobei eine erste Funktionssteuerung (7a) angepasst ist, um ein Bild (10) auf einem Anzeigebildschirm (6) auszurichten, welcher auf der TPU angeordnet ist, um für einen Bediener lesbar zu sein, und
eine zweite Funktionssteuerung (7b) mit der Funktion einer Freigabevorrichtung (11) angepasst ist, in die Griffoberfläche (8) integriert zu werden.

2. Industrierobotersystem gemäß Anspruch 1, wobei eine zweite Funktionssteuerung (7b) und eine dritte Funktionssteuerung (7c) innerhalb des Griffbereichs einer Hand in der Betriebsposition (A) oder (B) angeordnet sind.

3. Industrierobotersystem gemäß irgendeinem der vorhergehenden Ansprüche, wobei die Programmiereinheit (4), über ein Kabel (5) mit dem Steuerungssystem (3) verbunden ist.

4. Industrierobotersystem gemäß Anspruch 3, bei dem die einhüllende Oberfläche (17) des Kabels (5) rot lackiert ist, sodass das Risiko der Beschädigung des Kabels, welches auf dem Boden liegt, reduziert wird.

5. Tragbare Programmier- und Steuerungseinheit, TPU (4), zum Programmieren und Betreiben eines Industrieroboters, einschließlich eines Manipulators (2) und eines Steuerungssystems (3), wobei die TPU (4), eingeschlossen und mit einem Griffstück ausgestattet ist, umfassend eine Griffoberfläche (8), für die greifende Hand (9) eines Bedieners, einen Anzeigebildschirm (6), welcher angepasst ist, ein Bild (10) und eine Vielzahl von Funktionssteuerungen (7) zu zeigen, **dadurch gekennzeichnet, dass**
die Griffoberfläche (8) symmetrisch um eine Längslinie (C) angeordnet ist, um ein komfortables Greifen sowohl durch eine rechte (9a), als auch durch eine linke (9b) Hand zu ermöglichen,
wobei die TPU (4) angepasst ist, eine erste Betriebsposition (A) für eine rechte Hand (9a) und eine zweite Betriebsposition (B) für eine linke Hand (9b) anzunehmen,
wobei die TPU angepasst ist, um 180 Grad gedreht zu werden, wenn sie zwischen den Betriebspositionen (A) und (B) bewegt wird und der Anzeigebildschirm (6) für den Bediener in beiden Positionen sichtbar ist,
wobei eine erste Funktionssteuerung (7a) mit der Funktion des Ausrichtens des Bildes (10), auf dem Anzeigebildschirm (6) ausgestattet ist, um für den Bediener lesbar zu sein, und eine zweite Funktionssteuerung (7b) mit der Funktion einer Freigabevorrichtung (11) angepasst ist, um in eine Griffoberfläche (8) integriert zu werden.

6. Programmiereinheit gemäß Anspruch 5, wobei die Griffoberfläche (8) und die zweite Funktionssteuerung (7b) auf der Einheit (4) angeordnet sind, um es für einen Bediener möglich zu machen, die Einheit (4) zu tragen, und gleichzeitig die zweite Funktionssteuerung (7b) mit derselben linken Hand (9b) / rechten Hand (9a) zu aktivieren.

7. Programmiereinheit gemäß Anspruch 5 oder 6, wobei die Griffoberfläche (8) zumindest teilweise aus einer Schicht eines flexiblen Materials, in der Form einer elastischen Membran (12) besteht.

8. Programmiereinheit gemäß Anspruch 7, wobei die zweite Funktionssteuerung (7b) angepasst ist, um von der elastischen Membran (12) abgedeckt zu werden.

9. Programmiereinheit gemäß irgendeinem der Ansprüche 5-8, wobei die Griffoberfläche (8) gestaltet ist, um sowohl für eine linke Hand (9b), als auch für eine rechte Hand (9a) geeignet zu sein.

10. Programmiereinheit gemäß irgendeinem der Ansprüche 5-9, wobei die zweite Funktionssteuerung (7b) einen Mehrkanalkontakt (13) aufweist, welcher mit einer Halterung (14) und mindestens zwei Trennschaltern (15) ausgestattet ist, wobei die Trennschalter in beanstandeter Beziehung zueinander sind und wobei die Halterung (14) angepasst ist, alle Trennschalter (15) zu beeinflussen.

11. Programmiereinheit gemäß irgendeinem der Ansprüche 5-10, wobei mindestens eine dritte Funktionssteuerung (7c), mit einer Halten-zum-Betrieb-Funktion ausgestattet ist.

12. Programmiereinheit gemäß Anspruch 11, wobei die dritte Funktionssteuerung (7c) innerhalb des Bereiches einer greifenden Hand (9a, 9b), in einer Griffposition auf der Grifffläche (8) angeordnet ist.

13. Programmiereinheit gemäß irgendeinem der Ansprüche 11-12, wobei eine dritte Funktionssteuerung (7c) auf der Programmiereinheit (4), innerhalb des Griffbereichs einer rechten Hand (9a) angeordnet ist und eine zusätzliche dritte Funktionssteuerung (7c) innerhalb des Griffbereichs einer linken Hand (9b) angeordnet ist.

14. Programmiereinheit gemäß irgendeinem der Ansprüche 11-13, wobei die dritte Funktionssteuerung (7c), innerhalb des Bereichs des Daumens (16), der greifenden Hand des Bedieners angeordnet ist.

15. Programmiereinheit gemäß irgendeinem der Ansprüche 5-14, wobei mindestens eine Funktionssteuerung (7d) mit einer Notstoppfunktion auf der Programmiereinheit (4) angeordnet ist.

16. Programmiereinheit gemäß Anspruch 15, wobei eine erste (7d) und eine zweite (7d) Funktionssteuerung mit einer Notstoppfunktion symmetrisch/diagonal auf der TPU (4) angeordnet sind.

17. Programmiereinheit gemäß irgendeinem der Ansprüche 5-16, wobei die TPU über eine kabellose Verbindung mit dem Steuerungssystem (3) verbunden ist.

18. Programmiereinheit gemäß irgendeinem der Ansprüche 5-17, wobei die TPU über ein Kabel (5) mit dem Steuerungssystem (3) verbunden ist.

19. Programmiereinheit gemäß Anspruch 18, wobei die einhüllende Oberfläche (17) des Kabels (5) rot lackiert ist, sodass das Risiko der Beschädigung des Kabels, welches auf dem Boden liegt, reduziert wird.

20. Programmiereinheit gemäß irgendeinem der Ansprüche 5-19, wobei die Griffoberfläche (8), symmetrisch um eine längslaufende Symmetrielinie C angeordnet ist.

21. Verfahren zum Betreiben eines Industrierobotersystems gemäß Anspruch 1, **dadurch gekennzeichnet, dass**
die TPU mit einer greifenden Hand gegriffen wird,
wobei auf das Greifen der TPU eine zweite Funktionssteuerung mit der Funktion einer Freigabevorrichtung (11) aktiviert wird, welche angepaßt, in die Griffoberfläche integriert ist,
wobei die TPU gedreht/geschwenkt wird, wenn die TPU von einer ersten Betriebsposition A in einer greifenden und aktivierenden rechten Hand (9a), in eine zweite Betriebsposition (B) in einer greifenden und aktivierenden linken Hand **(9a)** bewegt wird,
wobei die TPU gedreht/geschwenkt wird, wenn die TPU von einer zweiten Betriebsposition B in einer greifenden und aktivierenden linken Hand (9b), in eine erste Betriebsposition (A) in einer greifenden und aktivierenden rechten Hand (9a) bewegt wird,
wobei das Bild (10) auf dem Anzeigebildschirm (6), durch das Aktivieren einer ersten Funktionssteuerung (7a),
in eine Ausrichtung, welche für den Bediener lesbar ist, ausgerichtet wird.

22. Verfahren gemäß Anspruch 21, wobei der Bediener durch das Greifen der Programmiereinheit (4) mit seiner rechten Hand (9a)/ linken Hand (9b) auf der Griffoberfläche (8), die Einheit (4) hält und transportiert.

23. Verfahren gemäß Anspruch 22, wobei der Bediener mit derselben Hand (9a, 9b) sowohl die Einheit (4) trägt, als auch eine zweite Funktionssteuerung (7b) aktiviert.

24. Verfahren gemäß Anspruch 21, wobei der Bediener mit derselben Hand (9a, 9b) die Einheit (4) trägt, eine zweite Funktionssteuerung (7b) aktiviert und zusätzlich eine Funktionssteuerung (7c) mit einer Halten-zum-Betrieb-Funktion aktiviert.

25. Verwendung eines Industrieroboters gemäß irgendeinem der Ansprüche 1-4, eine tragbare TPU zum Programmieren eines Industrieroboters gemäß irgendeinem der Ansprüche 5-20, und ein Verfahren gemäß den Ansprüchen 21-24 zur kabellosen Verbindung mit einem beliebigen Industrieroboter.

## Revendications

1. Système de robot industriel, comprenant un robot industriel (1), comportant un manipulateur (2), un système de commande (3) et une unité de programmation et de commande portable, TPU (4), reliée au système de commande, pour programmer et actionner le robot, la TPU (4) étant étanche et munie d'une poignée, comprenant une surface de prise (8) pour la main préhensile (9) d'un opérateur, **caractérisé en ce que**
la TPU (4) est adaptée pour adopter une première position d'actionnement (A) pour une main préhensile droite (9a), position dans laquelle le robot est actionné avec la main gauche (9b),
la TPU (4) est adaptée pour adopter une deuxième position d'actionnement (B) pour une main préhensile gauche (9b), position dans laquelle le robot est actionné avec la main droite (9a),
la TPU (4) est agencée pour être mise en rotation à 180 degrés, quand elle est déplacée entre les positions d'actionnement (A) et (B),
la surface de prise (8) est agencée symétriquement autour d'une ligne longitudinale (C), pour permettre une prise confortable soit par une main droite (9a), soit par une main gauche (9b),
une première commande de fonction (7a) est adaptée pour orienter une image (10) sur un écran d'affichage (6), agencé sur la TPU, de façon à être lisible pour un opérateur et
une deuxième commande de fonction (7b), remplissant la fonction d'un dispositif de validation (11), est adaptée pour être intégrée dans la surface de prise (8).

2. Système de robot industriel selon la revendication 1, dans lequel une deuxième commande de fonction (7b) et une troisième commande de fonction (7c) sont agencées à l'intérieur de la zone de prise d'une main en position d'actionnement (A) ou (B).

3. Système de robot industriel selon l'une quelconque des revendications précédentes, dans lequel l'unité de programmation (4) est reliée, par l'intermédiaire d'un câble (5) au système de commande (3).

4. Système de robot industriel selon la revendication 3, dans lequel une surface enveloppante du câble (5) est peinte en rouge, de sorte que le risque de détérioration du câble, posé sur le sol, est réduit.

5. Unité de programmation et de commande portable, TPU (4), permettant de programmer et d'actionner un robot industriel, comportant un manipulateur (2) et un système de commande (3), ladite TPU (4) étant étanche et munie d'une poignée, comprenant une surface de prise (8) pour la main préhensile (9) d'un opérateur, un écran d'affichage (6), adapté pour montrer une image (10) et une pluralité de commandes de fonction (7), **caractérisé en ce que**
la surface de prise (8) est agencée symétriquement autour d'une ligne longitudinale (C), pour permettre une préhension confortable par soit une main droite (9a), soit une main gauche (9b),
la TPU (4) est adaptée pour adopter une première position d'actionnement (A) pour une main préhensile droite (9a), position dans laquelle le robot est actionné avec la main gauche (9b),
la TPU (4) est agencée pour être mise en rotation à 180 degrés, quand elle est déplacée entre les positions d'actionnement (A) et (B) et l'écran d'affichage (6) étant visible pour l'opérateur dans les deux positions,
une première commande de fonction (7a) est dotée de la fonction consistant à orienter l'image (10) sur l'écran d'affichage (6), de façon à être lisible pour un opérateur et
une deuxième commande de fonction (7b), remplissant la fonction d'un dispositif de validation (11), est adaptée pour être intégrée dans la surface de prise (8).

6. Unité de programmation selon la revendication 5, dans laquelle la surface de prise (8) et la deuxième commande de fonction (7b) sont agencées sur l'unité (4) pour permettre à un opérateur de porter l'unité (4) et d'activer, en même temps, la deuxième commande de fonction (7b) avec la même main gauche (9b)/main droite (9a).

7. Unité de programmation selon la revendication 5 ou 6, dans laquelle la surface de préhension (8) se compose au moins partiellement d'une couche d'un matériau flexible, sous la forme d'un diaphragme élastique (12).

8. Unité de programmation selon la revendication 7, dans laquelle la deuxième commande de fonction (7b) est adaptée pour être recouverte par le diaphragme élastique (12).

9. Unité de programmation selon l'une quelconque des revendications 5 à 8, dans laquelle la surface de prise (8) est conçue pour convenir tant à une main gauche (9a) qu'à une main droite (9a).

10. Unité de programmation selon l'une quelconque des revendications 5 à 9, dans laquelle la deuxième commande de fonction (7b) comprend un contact à canaux multiples (13), qui est muni d'un dispositif de pression (14) et d'au moins deux contacts (15), dans lequel les contacts sont agencés mutuellement espacés et dans lequel le dispositif de blocage (14) est adapté pour exercer une influence sur tous les contacts (15).

11. Unité de programmation selon l'une quelconque des revendications 5 à 10, dans laquelle au moins une troisième commande de fonction (7c) est munie d'une fonction marche/arrêt.

12. Unité de programmation selon la revendication 11, dans laquelle la troisième commande de fonction (7c) est agencée à portée d'une main préhensible (9a, 9b), dans une position de prise, sur la surface préhensile (8).

13. Unité de programmation selon l'une quelconque des revendications 11 à 12, dans laquelle une troisième commande de fonction (7c) est agencée sur l'unité de programmation (4), dans la zone de prise d'une main droite (9a) et une troisième commande de fonction (7c) supplémentaire est agencée dans la zone de prise d'une main gauche (9b).

14. Unité de programmation selon l'une quelconque des revendications 11 à 13, dans laquelle la troisième commande de fonction (7c) est agencée à portée du pouce (16) de la main préhensile de l'opérateur.

15. Unité de programmation selon l'une quelconque des revendications 5 à 14, dans laquelle au moins une commande de fonction (7d), dotée d'une fonction d'arrêt d'urgence, est agencée sur l'unité de programmation (4).

16. Unité de programmation selon la revendication 15, dans laquelle une première (7d) et une deuxième (7d) commande de fonction, dotées d'une fonction d'arrêt d'urgence, sont agencées symétriquement/en diagonale sur la TPU (4).

17. Unité de programmation selon l'une quelconque des revendications 5 à 16, dans laquelle la TPU est reliée, par l'intermédiaire d'une connexion sans fil, au système de commande (3).

18. Unité de programmation selon l'une quelconque des revendications 5 à 17, dans laquelle la TPU est reliée, par l'intermédiaire d'un câble (5), au système de commande (3).

19. Unité de programmation selon la revendication 18, dans laquelle la surface enveloppante (17) du câble (5) est peinte en rouge, de sorte que le risque de détérioration du câble, posé sur le sol, est réduit.

20. Unité de programmation selon l'une quelconque des revendications 5 à 19, dans laquelle la surface de préhension (8) est mise en forme symétriquement autour d'une ligne de symétrie longitudinale C.

21. Procédé d'actionnement d'un système de robot industriel selon la revendication 1, **caractérisé par** le fait
de saisir la TPU avec une main préhensile,
qu'en saisissant la TPU, on active une deuxième commande de fonction, remplissant la fonction d'un dispositif de validation (11), adapté, intégré, dans la surface de prise,
de mettre en rotation/faire tourner la TPU, quand on déplace la TPU d'une première position d'actionnement (A) dans une main droite préhensile et d'activation (9a) vers une deuxième position d'actionnement (B) dans une main gauche préhensile et d'activation (9a),
de mettre en rotation/faire tourner la TPU, quand on déplace la TPU d'une deuxième position d'actionnement (B) dans une main gauche préhensile et d'activation (9b) vers une première position d'actionnement (A) dans une main droite préhensile et d'activation (9a),
de diriger l'image (10) sur l'écran d'affichage (6) en une orientation lisible pour l'opérateur, en activant une première commande de fonction (7a).

22. Procédé selon la revendication 21, dans lequel l'opérateur, en saisissant l'unité de programmation (4) avec sa main droite (9a)/main gauche (9b) sur la surface de préhension (8), tient et porte l'unité (4).

23. Procédé selon la revendication 22, dans lequel l'opérateur porte l'unité (4) et active une deuxième commande de fonction (7b) avec la même main (9a, 9b).

24. Procédé selon la revendication 21, sans lequel l'opérateur porte l'unité (4), active une deuxième commande de fonction (7b) et active, de plus, une commande de fonction (7c) avec une fonction marche/arrêt, avec la même main (9a, 9b).

25. Utilisation d'un robot industriel selon l'une quelconque des revendications 1 à 4, une TPU portative permettant de programmer un robot industriel selon l'une quelconque des revendications 5 à 20 et procédé selon les revendications 21 à 24 pour une connexion sans fil avec un robot industriel en option.
